# FASCICULE DE BREVET EUROPEEN

(11) **EP 2 171 427 B1**
(45) Date de publication et mention de la délivrance du brevet: **02.09.2015**
(21) Numéro de dépôt: 08786215.7
(22) Date de dépôt: 17.07.2008
(51) Int. Cl.: G01N 17/02, G01N 17/04

(54) **DISPOSITIF DE SUPPORT D'ECHANTILLONS METALLIQUES**
TRÄGERVORRICHTUNG FÜR METALLPROBEN
SUPPORT DEVICE FOR METALLIC SAMPLES

(30) Priorité: 18.07.2007 FR 0756581
(43) Date de publication de la demande: 07.04.2010
(73) Titulaire: Commissariat à l'Énergie Atomique et aux Énergies Alternatives, 75015 Paris (FR)
(72) Inventeur: ROY, Marc, F-91440 Bures Sur Yvette (FR); FERON, Damien, F-92260 Fontenay Aux Roses (FR)
(74) Mandataire: Ilgart, Jean-Christophe
(86) Numéro de dépôt international: PCT/EP2008/059382
(87) Numéro de publication internationale: WO 2009/010557

(56) Documents cités:
- DE-A1- 19 957 308
- FR-A- 2 671 182
- US-A- 4 049 525
- US-A- 4 282 181

## Description

### DOMAINE TECHNIQUE

Il est important de connaître la manière dont les échantillons de suivi corrosimétrique sont reliés aux appareils de mesure car suivant le système utilisé, les résultats obtenus peuvent être erronés à cause de phénomènes parasites tel que le couplage galvanique ou des phénomènes de corrosion par effet de crevasse.

US-A-4049525 décrit un dispositif de support d'échantillons métalliques dans lequel des suivis corrosimétriques peuvent être réalisés comportant un bâti, une série de suspension d'échantillons et une électrode de référerice fixées sur le bâti par l'intermédiaire de blocs d'un matériau électriquement isolant. Ce document décrit aussi des éléments individuels de maintien des échantillons.

La présente invention a pour objet un dispositif de support d'échantillons dans lequel des suivis corrosimétriques peuvent être réalisés de façon pratique dans divers milieux avec différents matériaux en évitant des phénomènes parasites tel que les couplages galvaniques ou les phénomènes de corrosion par effet de crevasse qui faussent les mesures électrochimiques.

Ces buts sont atteints conformément à l'invention, du fait que le dispositif comporte :
- un bâti ;
- une série de suspensions d'échantillons fixées sur le bâti par l'intermédiaire de blocs d'un matériau isolant ;
- une série d'électrodes de référence montées sur le bâti par l'intermédiaire de bloc d'un matériau isolant ;
- au moins une barre de maintien des échantillons, ladite barre comportant des logements dans lesquels sont reçus une extrémité des échantillons.

Le nombre d'échantillons étudié peut être élevé ce qui réduit le nombre d'expérience. Cela peut être très important lorsque les expériences sont réalisées sur site et concernent des durées importantes.

Selon l'invention, les suspensions d'échantillons peuvent être des crochets.

Dans ce cas, les échantillons se présentent avantageusement sous la forme d'une plaque comportant deux extrémités et un trou à chacune de ces extrémités, un premier trou recevant le crochet du bâti, une barre de retenue en un matériau isolant passant au travers du second trou, ce second trou étant d'un diamètre suffisant par rapport au diamètre de la barre pour autoriser un débattement à l'échantillon.

Avantageusement, la hauteur des crochets est réglable.

Selon l'invention, les suspensions d'échantillons peuvent comporter une tige filetée qui traverse les échantillons enrobés dans une résine.

Avantageusement, le matériau isolant est le Téflon®.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en perspective d'un mode de réalisation de l'invention ;
- la figure 2 est une vue de détail montrant la partie basse du dispositif représenté sur la figure 1 ;
- la figure 3 est une vue de détail représentant un exemple d'échantillon ;
- la figure 4 est une vue similaire à la figure 3 montrant le débattement d'un échantillon à l'extrémité d'un crochet ;
- la figure 5 est une vue de dessus, du dispositif représenté sur la figure 1 ;
- la figure 6 est une vue de détail qui montre la fixation d'une électrode de référence ;
- la figure 7 est une vue de détail qui montre un second mode de réalisation de l'invention.

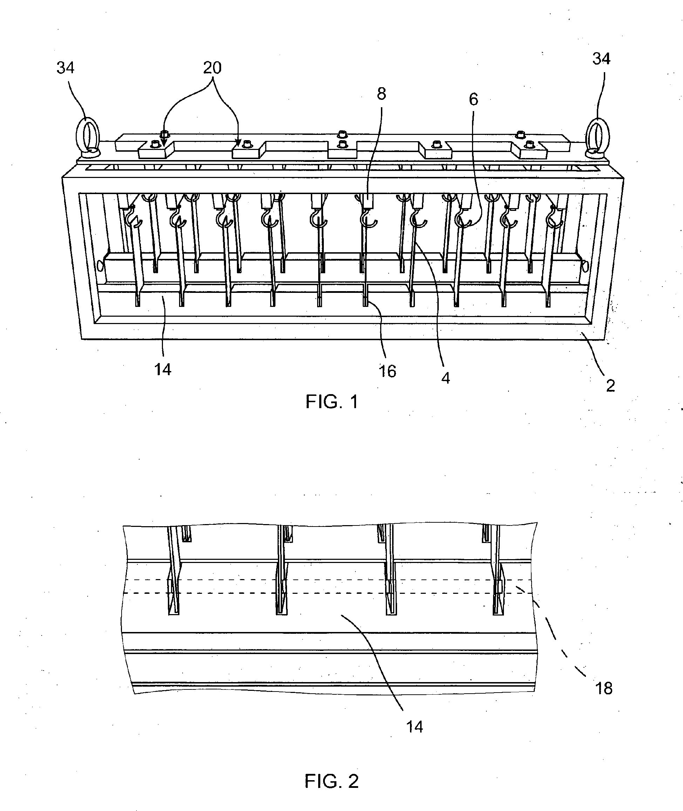

Le dispositif de support d'échantillons métalliques représenté sur la figure 1 comporte un bâti 2. Ce bâti 2 est constitué de tubes en acier inoxydable de section carrée. Le bâti 2 présente une forme de parallélépipède, dont chaque côté est matérialisé par un tube métallique. A l'intérieur du bâti sont suspendus des échantillons 4 à l'extrémité de crochet 6. Les crochets 6 sont eux-mêmes fixés à l'intérieur du bâti par l'intermédiaire de blocs 8 en un matériau isolant, par exemple le Téflon®.

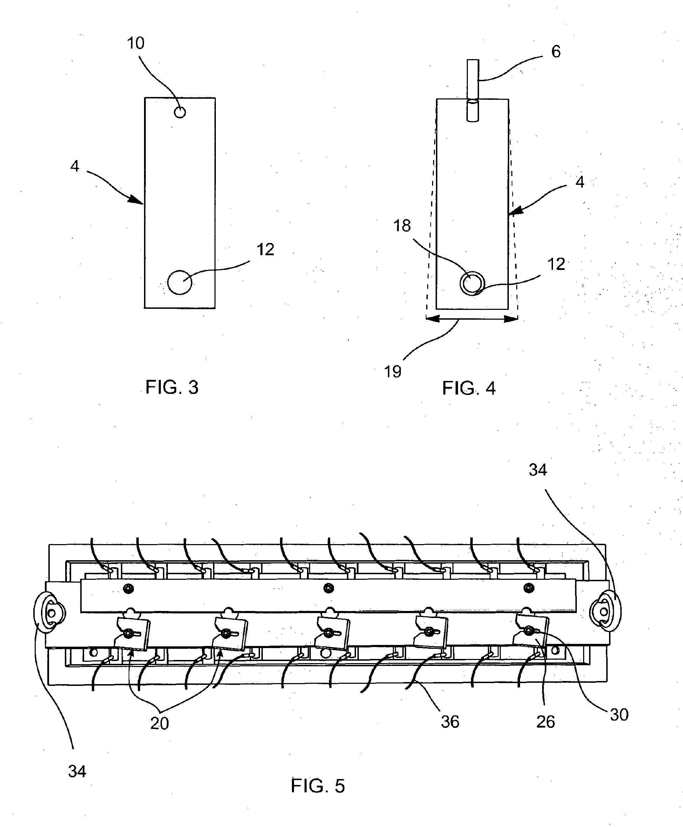

Comme on peut le voir sur la figure 3, les échantillons 4 présentent une forme rectangulaire. A une extrémité de l'échantillon 4 on trouve un trou 10 pour le crochet et à une extrémité inférieure de l'échantillon 4 on trouve un trou 12 pour une barre de retenue en Téflon®.

Comme on peut le voir sur la figure 1, l'extrémité inférieure des échantillons 4 est reçue à l'intérieur d'une barre de maintien 14 comportant des logements 16 dans lesquels sont reçues les extrémités inférieures des échantillons 4. Comme on peut le voir sur la figure 2, la barre de maintien 14 est traversée de part en part par une barre de retenue 18. La barre de retenue 18 est de préférence réalisée en Téflon®. Elle passe dans un trou qui s'étend d'une extrémité à l'autre de la barre de maintien 14 et, dans chacun des logements 16 elle traverse l'extrémité inférieure de l'échantillon 4 en passant par le trou 12 prévu à cette extrémité. Les barres de Téflon® 18 sont fixées à chaque extrémité du bâti par des clips. Le diamètre du trou 12 est prévu plus grand que le diamètre extérieur de la barre de retenue 18 de manière à permettre un léger débattement 19 de l'échantillon 4 autour du crochet 6, comme représenté sur la figure 4. Cette différence de diamètre est d'environ 1mm. Ces mouvements de l'échantillon empêchent l'immobilisation de microvolumes de solution entre le crochet 6 et la plaque 4, ce qui pourrait provoquer de la corrosion par effet de crevasse.

Dans l'exemple de réalisation représenté sur les figures 1 à 6, le bâti comporte deux rangées de dix crochets qui permettent ainsi de fixer vingt échantillons. Le poids à vide sans câble est de 9 kilos. La hauteur du bâti est de 24cm, sa largeur de 15cm et sa longueur de 58cm. Toutefois, il est évident que ces dimensions peuvent varier en fonction de la taille ou du nombre d'échantillons à étudier.

Des électrodes de référence, au nombre de cinq, sont intercalées entre les deux rangées d'échantillons. Il y a moins d'électrode de référence que d'échantillons parce qu'il n'est pas nécessaire d'avoir une électrode de référence pour chaque échantillon. D'autre part, chaque échantillon est proche d'une électrode de référence ce qui permet d'obtenir des mesures exactes. En effet, si la distance entre l'échantillon et l'électrode de mesure est importante et le liquide peu conducteur, la mesure sera faussée par l'introduction d'une résistance parasite.

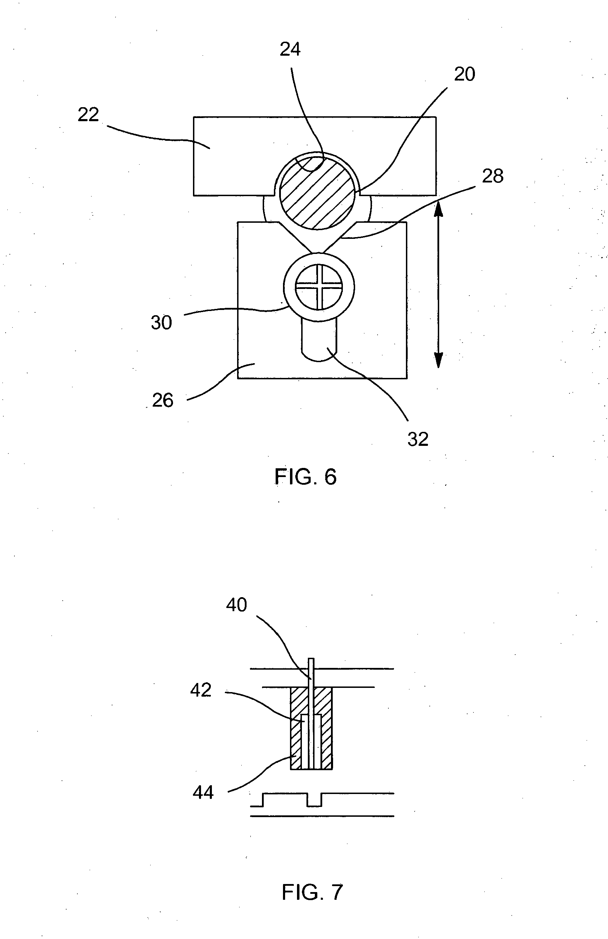

On observera sur les figures 5 et 6 le système de fixation des électrodes de référence L'électrode de référence 20 est logée à l'intérieur d'une pièce de Téflon® 22 comportant un logement semi circulaire 24. De l'autre côté de l'électrode de référence 20 une pièce 26 comportant un V 28 est montée coulissante autour d'une vis 30 grâce à une rainure 32. Pour immobiliser l'électrode on glisse la pièce 26 dans la rainure 32 jusqu'à ce que le V 28 vienne en contact avec le diamètre de l'électrode de référence 24 et on la bloque dans cette position au moyen de la vis 30.

Comme on peut le voir sur les figures 1 et 5, le bâti comporte des anneaux d'accrochage 34 qui permettent de le suspendre dans le milieu étudié, par exemple, dans le courant d'une rivière. On peut aussi observer les fils électriques 36 qui permettent d'établir un contact électrique au niveau de l'extrémité supérieure des échantillons 4.

Avec ce dispositif, toutes sortes de mesure électrochimiques peuvent être réalisées, par exemple le suivi de potentiel, de résistance de polarisation, suivi d'intensité de courant, etc.

On a représenté sur la figure 7, une variante de réalisation de l'invention. Dans cette variante les crochets 6 sont remplacés par une tige filetée 40 qui vient se visser à l'intérieur d'un tube 42. Le tube 42 est enrobé d'une résine 44. Ce dispositif est particulièrement adapté aux mesures d'impédancemétrie (Mott-Schottki).

## Revendications

1. Dispositif de support d'échantillons métalliques comportant :
- un bâti (2) ;
- une série de suspension d'échantillons (6, 40) fixées sur le bâti (2) par l'intermédiaire de bloc d'un matériau isolant; ledit dispositif étant **caractérisé en ce qu'**il comporte:
- une série d'électrodes de référence (20) montées sur le bâti par l'intermédiaire de blocs (22) d'un matériau isolant ;
- au moins une barre de maintien des échantillons (14), ladite barre comportant des logements (16) dans lesquels sont reçus une extrémité des échantillons (4).

2. Dispositif selon la revendication 1, **caractérisé en ce que** les suspensions d'échantillons sont des crochets (6).

3. Dispositif selon la revendication 2, **caractérisé en ce que** les échantillons se présentent sous la forme d'une plaque comportant deux extrémités et un trou (10, 12) à chacune de ces extrémités, un premier trou (10) recevant le crochet du bâti, une barre de retenue (18) en un matériau isolant passant au travers du second trou (12), ce second trou étant d'un diamètre suffisant par rapport au diamètre de la barre pour autoriser un débattement à l'échantillon (19).

4. Dispositif selon la revendication 2, **caractérisé en ce que** la hauteur des crochets est réglable.

5. Dispositif selon la revendication 1, **caractérisé en ce que** les suspensions d'échantillons comportent une tige filetée (40) qui traverse les échantillons (42) enrobés dans une résine (44).

6. Dispositif selon l'une quelconque des revendications 1 à 5, **caractérisé en ce que** le matériau isolant est le Téflon®.

## Patentansprüche

1. Trägervorrichtung für Metallproben, welche Folgendes umfasst:
- einen Grundrahmen (2);
- eine Reihe von Aufhängungen für die Proben (6, 40), welche auf dem Grundrahmen (2) durch einen Block aus einem Isoliermaterial befestigt sind;
wobei die Vorrichtung **dadurch gekennzeichnet ist, dass** sie Folgendes umfasst:
- eine Reihe von Bezugselektroden (20), welche auf dem Grundrahmen durch Blöcke (22) aus Isoliermaterial befestigt sind;
- mindestens eine Halteschiene für die Proben (14), wobei die Schiene Sitze bzw. Lagerbetten (16) umfasst, in denen ein Ende der Proben (4) aufgenommen ist.

2. Vorrichtung nach Anspruch 1, **dadurch gekennzeichnet, dass** die Probenaufhängungen Haken sind.

3. Vorrichtung nach Anspruch 2, **dadurch gekennzeichnet, dass** die Proben in der Form einer Platte erscheinen, welche zwei Enden und eine Bohrung (10, 12) an jedem ihrer Enden aufweist, wobei eine erste Bohrung (10) den Haken des Grundrahmens aufnimmt, wobei eine Haltestange (18) aus einem Isoliermaterial durch die zweite Bohrung (12) hindurchgeht, wobei diese zweite Bohrung einen Durchmesser aufweist, welcher im Verhältnis zum Durchmesser der Stange ausreicht, um der Probe (19) einen Federweg bzw. Ausschlag zu gestatten.

4. Vorrichtung nach Anspruch 2, **dadurch gekennzeichnet, dass** die Höhe der Haken regulierbar ist.

5. Vorrichtung nach Anspruch 1, **dadurch gekennzeichnet, dass** die Probenaufhängungen eine Gewindestange (40) umfassen, welche die in Harz (44) verpackten Proben (42) durchquert.

6. Vorrichtung nach einem der Ansprüche 1 bis 5, **dadurch gekennzeichnet, dass** es sich bei dem Isoliermaterial um TeflonÊ handelt.

## Claims

1. A device for supporting metal samples including:
- a frame (2);
- a series of suspension of samples (6, 40) attached on the frame (2) via a block of insulating material; said device being **characterized in that** it includes:
- a series of reference electrodes (20) mounted on the frame via blocks (22) of insulating material;
- at least one bar for maintaining the samples (14), said bar including housings (16) in which are received an end of the samples (4).

2. The device according to claim 1, **characterized in that** the suspensions of samples are hooks (6).

3. The device according to claim 2, **characterized in that** the samples appear as a plate including two ends and a hole (10, 12) at each of these ends, a first hole (10) receiving the hook of the frame, a retaining bar (18) in an insulating material passing through the second hole (12), this second hole being of a sufficient diameter relatively to the diameter of the bar for allowing a displacement at the sample (19).

4. The device according to claim 2, **characterized in that** the height of the hooks is adjustable.

5. The device according to claim 1, **characterized in that** the suspensions of samples include a threaded rod (40) which crosses the samples (42) coated with a resin (44).

6. The device according to any one of claims 1 to 5, **characterized in that** the insulating material is Teflon®.
